# EUROPÄISCHE PATENTANMELDUNG

(11) **EP 2 279 895 A2**
(43) Veröffentlichungstag der Anmeldung: **02.02.2011**
(21) Anmeldenummer: 10007487.1
(22) Anmeldetag: 20.07.2010
(51) Int. Cl.: B60L 11/18

(54) **Lade-steckdose zur Aufladung eines Elektroautos, mit Mitteln zur Einbindung in ein Telefonnetz**

(30) Priorität: 01.08.2009 DE 102009035825
(71) Anmelder: ABB AG, 68309 Mannheim (DE)
(72) Erfinder: Lange, Manfred, Dipl.-Ing., 44229 Dortmund (DE); Wilms, Benjamin, Dipl.-Ing., 58802 Balve (DE)

(57) **Zusammenfassung**

Es wird eine Lade-Steckdose (1, 2, 3) zur Aufladung eines Elektroautos über ein zwischen Eingangs-Anschlussklemmen (10) der Lade-Steckdose und einer elektrischen Kupplung (23) des aufzuladenden Fahrzeuges (22) verlaufendes Lade-Kabel (20, 32, 36) vorgeschlagen, mit Mitteln zur Einbindung der Lade-Steckdose in ein Telefonnetz, wobei diese Mittel eine Kommunikations-/Auswerte-Nerarbeitungseinheit (13,16) für das Telefonnetz (38, 43) umfassen.

## Beschreibung

Die Erfindung betrifft eine Lade-Steckdose zur Aufladung eines Elektroautos, mit Mitteln zur Einbindung in ein Telefonnetz.

Führende Autohersteller und Energiekonzerne haben sich auf einen gemeinsamen Fahrzeug-Steckverbinder für Elektroautos mit hierzu korrespondierender elektrischer Kupplung geeinigt (Industrie-Standard), mit dem Fahrzeugbesitzer weltweit die Akkumulatoren ihrer Elektroautos aufladen können.

Der Erfindung liegt die Aufgabe zugrunde, eine Lade-Steckdose zur Aufladung eines Elektroautos mit erweiterten Anwendungsmöglichkeiten anzugeben.

Diese Aufgabe wird erfindungsgemäß gelöst durch eine Lade-Steckdose zur Aufladung eines Elektroautos über ein zwischen Eingangs-Anschlussklemmen der Lade-Steckdose und einer elektrischen Kupplung des aufzuladenden Fahrzeuges verlaufendes Lade-Kabel, mit Mitteln zur Einbindung der Lade-Steckdose in ein Telefonnetz, wobei diese Mittel eine Kommunikations-/Auswerte-/Verarbeitungseinheit für das Telefonnetz umfassen.

Die mit der Erfindung erzielbaren Vorteile bestehen insbesondere darin, dass interessierende Daten, wie aktueller Ladestatus der Akkumulatoren des Fahrzeuges oder die zur Aufladung der Akkumulatoren eingesetzte Leistung über das Telefonnetz übertragen werden können. Des Weiteren kann eine unberechtigte Nutzung der Lade-Steckdose unterbunden werden. Es kann eine Überprüfung der Nutzungs-Berechtigung, gegebenenfalls ergänzt durch eine Identifizierung des Anwenders erfolgen, beispielsweise für die Verrechnung der beim Aufladen des Fahrzeuges entstandenen Kosten.

Zweckmäßige Ausgestaltungen der Erfindung sind in den Unteransprüchen gekennzeichnet.

Gemäß einer ersten Möglichkeit kann die Lade-Steckdose einen Telefonanschluss für ein Festnetz aufweisen und die Kommunikations-/Auswerte-Nerarbeitungseinheit für die Kommunikation mit Festnetz-Telefonen eines Festnetzes ausgebildet sein.

Gemäß einer zweiten Möglichkeit kann die Kommunikations-/Auswerte-Nerarbeitungseinheit als Funk-/Auswerte-/Verarbeitungseinheit mit einer zugeordneten Antenne für die Kommunikation mit Mobiltelefonen eines Mobilfunknetzes ausgebildet sein.

Die Kommunikations-/Auswerte-Nerarbeitungseinheit kann mit dem Steuereingang eines zwischen Eingangs-Anschlussklemmen und einen elektrischen Ausgangs-Anschluss der Lade-Steckdose eingebundenen Schaltgliedes verbunden sein.

Für eine Daten-Kommunikation zwischen der Kommunikations-/Auswerte-Nerarbeitungseinheit und einem Fahrzeug-Rechner mit Auswerte-Nerarbeitungseinheit erfolgt die Signalwandlung der kommunizierten Daten jeweils in den Auswerte-Nerarbeitungseinheiten.

Der elektrische Ausgangs-Anschluss kann in Form eines Steckdosen-Gerätesockels zum Einführen eines Steckverbinders eines Ladekabels ausgebildet sein, wodurch eine Unterputz-Ausführung der Lade-Steckdose realisierbar ist.

Alternativ kann der elektrische Ausgangs-Anschluss in Form eines innerhalb des Gehäuses der Lade-Steckdose befindlichen und bedarfsweise aus dem Gehäuse herausziehbaren Lade-Kabels inklusive endseitigem Steckverbinder ausgebildet sein. Dabei ergibt sich als erste Möglichkeit, eine automatische Kabelaufwicklung des Lade-Kabels im Gehäuse der Lade-Steckdose vorzusehen und als zweite Möglichkeit, ein Spiralkabel als Lade-Kabel einzusetzen.

Die Erfindung wird nachstehend an Hand der in der Zeichnung dargestellten Ausführungsbeispiele näher erläutert. Es zeigen:
- Fig. 1: eine schematische Darstellung einer Lade-Steckdose in Unterputz- Ausführung mit einem daran angeschlossenen Fahrzeug (Elektroauto), wobei eine Kommunikation zwischen Lade-Steckdose respektive Fahr- zeug einerseits und einem Festnetz andererseits möglich ist,
- Fig. 2: eine schematische Darstellung einer Lade-Steckdose in Unterputz- Ausführung mit einem daran angeschlossenen Fahrzeug, wobei eine Kommunikation zwischen Lade-Steckdose respektive Fahrzeug einerseits und einem Mobilfunknetz andererseits möglich ist,
- Fig. 3: eine alternative Ausführungsform zu den Figuren 1 und 2 unter Verwen- dung einer eine Kabelaufwicklung aufweisenden Lade-Steckdose für Wand- oder Bodenbefestigung,
- Fig. 4: eine alternative Ausführungsform zu den Figuren 1 und 2 unter Verwen- dung einer ein Spiralkabel aufweisenden Lade-Steckdose für Wand- oder Bodenbefestigung.

Die vorgeschlagene Lade-Steckdose eignet sich sowohl für eine Unterputz-Ausführung, als auch für Wandbefestigung, Pfostenbefestigung und Bodenbefestigung. Wesentlich sind dabei die Mittel, welche eine Kommunikation zwischen der Lade-Steckdose und einem Telefonnetz ermöglichen, wobei alternativ ein Festnetz oder ein Mobilfunknetz zum Einsatz gelangen können. Nachfolgend werden die einzelnen Ausführungsformen näher erläutert.

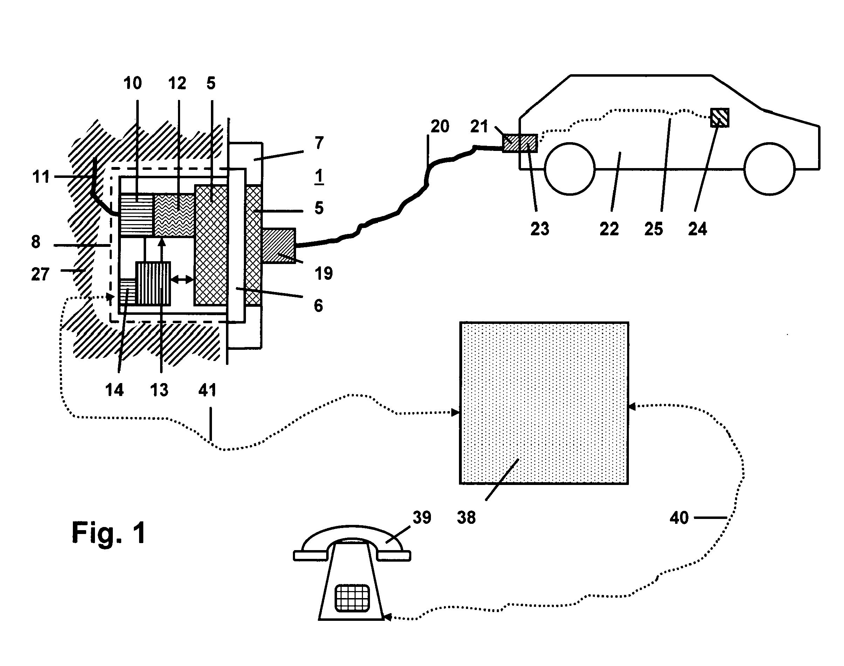

In Fig. 1 ist eine schematische Darstellung einer Lade-Steckdose in Unterputz-Ausführung mit einem daran angeschlossenen Fahrzeug (Elektroauto) dargestellt, wobei eine Kommunikation zwischen Lade-Steckdose respektive Fahrzeug einerseits und einem Festnetz möglich ist. Es ist eine Wand 27 (z. B. Wand einer Garage oder eines Carports) mit darin montierter Unterputzdose 8 (handelsübliche UP-Gerätedose aus Kunststoff mit 60 mm Durchmesser) zu erkennen, in welcher eine Lade-Steckdose 1 in Unterputz-Ausführung installiert ist, welche einen Steckdosen-Gerätesockel 5 (elektrischer Ausgangs-Anschluss) mit elektrischen Kontakten für den Anschluss eines ersten Fahrzeug-Steckverbinders 19 eines Lade-Kabels 20, Eingangs-Anschlussklemmen 10, ein Schaltglied 12 mit Steuereingang, eine Kommunikations-/Auswerte-/Verarbeitungseinheit 13 inklusive Speicherelement und einen Telefonanschluss 14 für die Verbindung mit einem Festnetz aufweist. Die Kommunikations-/Auswerte-/Verarbeitungseinheit 13 weist Mittel auf, eine Ziel-Nummer über das Telefonnetz zugewiesen zu bekommen.

Die Eingangs-Anschlussklemmen 10 stellen die Verbindung mit einem Anschlusskabel 11 her, über welches die elektrische Leistung zum Aufladen der Akkumulatoren eines Fahrzeuges zur Verfügung gestellt wird. Zum Aufladen eines Fahrzeuges 22 wird das Lade-Kabel 20 mit seinem ersten Fahrzeug-Steckverbinder 19 in den Steckdosen-Gerätesockel 5 und mit seinem zweiten Fahrzeug-Steckverbinder 21 in eine am Fahrzeug 22 befestigte, korrespondierend hierzu ausgebildete elektrische Kupplung 23 eingesteckt.

Beim Fahrzeug-Steckverbinder 21 und der korrespondierenden elektrischen Kupplung 23 handelt es sich vorteilhaft um standardisierte Komponenten (Industrie-Standard), wodurch es ermöglicht wird, dass die Akkumulatoren eines Fahrzeugs (Elektroautos) in schneller Art und Weise aufgeladen werden können, ohne dass dabei Adapter eingesetzt werden müssten. Die Ladespannung liegt im Bereich 400 V (vorzugsweise Dreiphasenwechselstrom) und die Stromstärke kann bis 63 A betragen.

An die elektrische Kupplung sind die Akkumulatoren des Fahrzeuges über einen Gleichrichter angeschlossen. Die Aufladung der Akkumulatoren selbst erfolgt vorzugsweise in geregelter Art und Weise über eine entsprechende Lade-Steuer-/Regelvorrichtung, welche in Form eines separaten Gerätes ausgebildet oder Teilkomponente eines Fahrzeug-Rechners sein kann. Werden z. B. Lithium-lonen Akkumulatoren verwendet, so wird zunächst mit konstantem Anfangsstrom geladen. Erreicht der Akkumulator eine definierte Zellenspannung, so wird dieser Strom gehalten, bis der Ladestrom fast gegen Null zurückgefallen ist. Die Ladung wird beendet, wenn der Ladestrom einen definierten, sehr geringen Wert des Anfangsstroms erreicht bzw. nicht mehr weiter absinkt. Dementsprechend können Kennlinien offline erstellt und in der Lade-Steuer-/Regelvorrichtung respektive im Fahrzeug-Rechner abgespeichert werden. An Hand dieser Kennlinien und der aktuell erfassen Spannungs- und Stromwerte lassen sich während des Aufladeprozesses der aktuelle Ladestatus der Akkumulatoren, die Rest-Ladezeit und der Zeitpunkt des voraussichtlichen Lade-Endes berechnen. Selbstverständlich lässt sich an Hand der während es Aufladeprozesses erfassten Strom- und Spannungswerte für Verrechnungszwecke auch die für die Aufladung erforderlich gewordene Leistung berechnen.

Das Schaltglied 12 ist elektrisch zwischen den Eingangs-Anschlussklemmen 10 und den elektrischen Kontakten des Steckdosen-Gerätesockels 5 eingebunden und wird über seinen Steuereingang von der Kommunikations-/Auswerte-/Verarbeitungseinheit 13 angesteuert, welche ihrerseits unmittelbar mit dem über ein Kabel 41 an ein Festnetz 38 angeschlossenen Telefonanschluss 14 verbunden ist. Die Energieversorgung der Kommunikations-/Auswerte-/Verarbeitungseinheit 13 erfolgt zweckmäßig über die Eingangs-Anschlussklemmen 10.

Die Lade-Steckdose 1 weist eine Zentralscheibe 6 und einen Abdeckrahmen 7 auf, so dass eine formschöne Einbindung / Integration in ein Installationsgeräte-Programm respektive Schalter- und Steckdosenprogramm sowie eine Kombination mit weiteren Geräten, beispielsweise Schaltern / Tastern / Dimmern / Steckdosen dieses Schalter- und Steckdosenprogramms unter Verwendung von Mehrfach-Abdeckrahmen möglich ist.

Das Fahrzeug 22 besitzt einen Fahrzeug-Rechner 24, welcher über ein Kabel 25 an die Kupplung 23 angeschlossen ist und neben weiteren Komponenten z. B. eine Anzeigeeinheit, eine Eingabeeinheit und eine Auswerte-/Verarbeitungseinheit besitzt. An das Festnetz 38 (z. B. DECT, Digital Enhanced Cordless Telecommunications) ist wie üblich eine Vielzahl von Festnetz-Telefonen 39 beispielsweise über Kabel 40 oder über eine Funk-Zwischenstrecke angeschlossen. Über die Kommunikations-/Auswerte-/Verarbeitungseinheit 13 wird eine Kommunikation zwischen einem Festnetz-Telefon 39 und der Lade-Steckdose 1 respektive dem daran angeschlossenen Fahrzeug 22 (im Zusammenwirken mit den Auswerte-/Verarbeitungseinheiten) ermöglicht.

Dabei können Mittel in der Lade-Steckdose vorgesehen sein, welche eine Kommunikation zwischen Fahrzeug 22 und Lade-Steckdose 1 und umgekehrt sowie eine Freischaltung zum Zwecke der Aufladung erst dann freigegeben, nachdem sich das Fahrzeug eindeutig identifiziert hat. Zweckmäßig wird eine derartige Identifizierung in einer Anzeigeeinheit der Lade-Steckdose zur Anzeige gebracht.

Die Signalumsetzung, die Abspeicherung gewünschter / ermittelter Signalfolgen, die Wandelung von Daten und gegebenenfalls eine Verschlüsselung (Codierung / Decodierung) erfolgt jeweils in den Auswerte-Nerarbeitungseinheiten der Lade-Steckdose und des Fahrzeuges (dem Fahrzeug-Rechner zugeordnet respektive dort impliziert). Dabei kann die Datenübertragung über das Lade-Kabel z. B. durch Modulation einer oder mehrerer Trägerfrequenzen erfolgen (Trägerfrequenz-Datenübertragung über eine elektrische Leitung), d. h. die Auswerte-/Verarbeitungseinheiten enthalten derartige für die Daten-Kommunikation geeignete Modulations-/Demodulations-Einrichtungen.

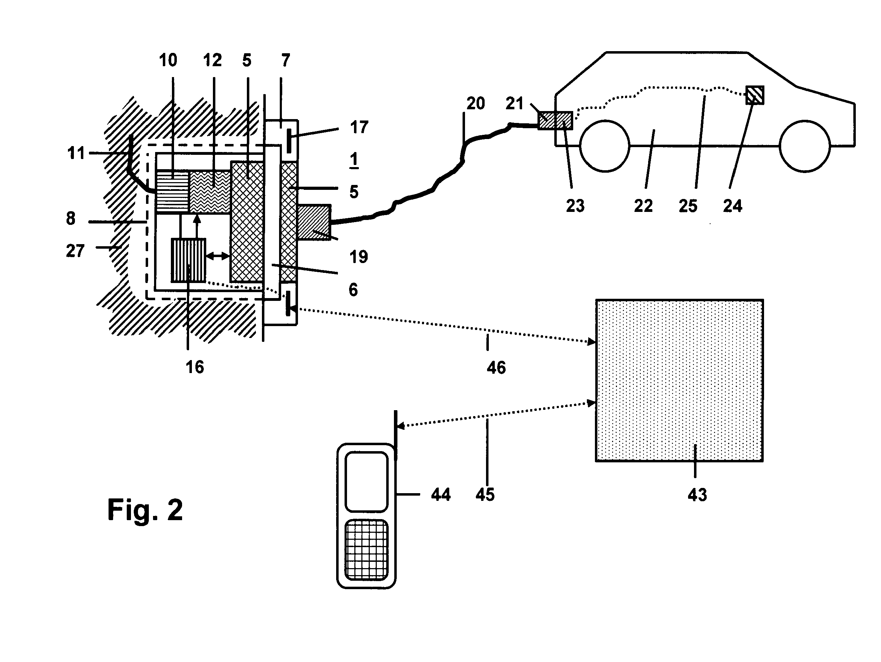

In Fig. 2 ist eine schematische Darstellung einer Lade-Steckdose in Unterputz-Ausführung mit einem daran angeschlossenen Fahrzeug dargestellt, wobei eine Kommunikation zwischen Lade-Steckdose respektive Fahrzeug einerseits und einem Mobilfunknetz andererseits möglich ist. Bei dieser Ausführungsform entfallen im Vergleich zur Ausführungsform gemäß Fig. 1 die Kommunikations-/Auswerte-/Verarbeitungseinheit 13 mit Telefonanschluss 14. Stattdessen weist die Lade-Steckdose 1 eine Funk-/Auswerte-/Verarbeitungseinheit 16 inklusive Speicherelement auf, welche das Schaltglied 12 über dessen Steuereingang ansteuert und welche ihre Versorgungsenergie über die Eingangs-Anschlussklemmen 10 erhält. Die Funk-/Auswerte-Nerarbeitungseinheit 16 ist mit einer in der Zentralscheibe 6 oder im Abdeckrahmen 7 integrierten Antenne 17 verbunden. Die Funk-/Auswerte-/Verarbeitungseinheit 13 weist Mittel auf, eine Ziel-Mobilfunknummer zugewiesen zu bekommen.

Mittels der Funk-/Auswerte-/Verarbeitungseinheit 16 inklusive Antenne 17 wird eine unmittelbare Kommunikation zwischen einem Mobilfunknetz 43 (GSM, Global System for Mobile Telecommunication) und der Lade-Steckdose 1 respektive dem daran angeschlossenen Fahrzeug 22 über eine Funkstrecke 46 ermöglicht. An das Mobilfunknetz 43 ist wie üblich eine Vielzahl von Mobiltelefonen 44 über Funkstrecken 45 angeschlossen. Die übrige Ausgestaltung ist wie unter Fig. 1 beschrieben.

Die Kommunikations-/Auswerte-/Verarbeitungseinheit 13 bzw. die Funk-/Auswerte-Nerarbeitungseinheit 16 sind über die elektrischen Kontakte des Steckdosen-Gerätesockels 5, das Lade-Kabel 20, die Kupplung 23 und das Kabel 25 datentechnisch mit dem Fahrzeugrechner 24 verbunden, so dass z. B. der vom Fahrzeug-Rechner 24 ermittelte und gemeldete aktuelle Ladestatus der Akkumulatoren des Fahrzeuges 22 und /oder die zur Aufladung der Akkumulatoren übertragene Leistung abgegriffen werden kann.

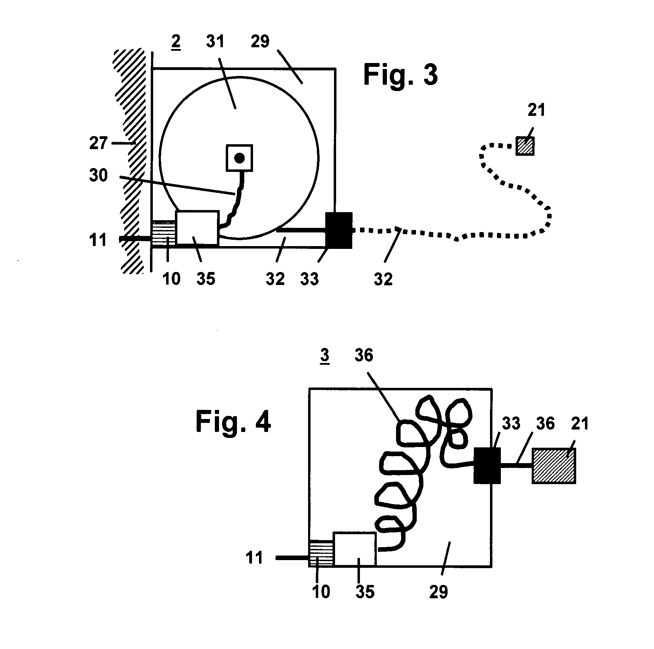

In Fig. 3 ist eine alternative Ausführungsform zu den Figuren 1 und 2 unter Verwendung einer eine Kabelaufwicklung aufweisenden Lade-Steckdose für Wand- oder Bodenbefestigung dargestellt. Die z. B. an der Wand 27 montierte Lade-Steckdose 2 besitzt im Innenraum ihres Gehäuses 29 eine automatische Kabelaufwicklung 31 mit einem darauf aufrollbaren respektive davon abrollbaren Lade-Kabel 32, welches über eine Kabel-Durchführung 33 aus dem Gehäuse 29 geführt wird und endseitig den zweiten Fahrzeug-Steckverbinder 21 (elektrischer Ausgangs-Anschluss) aufweist.

Die automatische Kabelaufwicklung 31 ist mit ihrem weiteren Ende über ein Kabel 30 mit einer Elektronik 35 verbunden, welche die Verbindung mit den Eingangs-Anschlussklemmen 10 und damit mit dem Anschlusskabel 11 herstellt. Unter dem Begriff Elektronik 35 werden in diesem Zusammenhang das Schaltglied 12 und die Kommunikations-/Auswerte-/Verarbeitungseinheit 13 inklusive Telefonanschluss 14 respektive die Funk-/Auswerte-Nerarbeitungseinheit 16 inklusive die Antenne 17 subsumiert.

In Fig. 4 ist eine alternative Ausführungsform zu den Figuren 1 und 2 unter Verwendung einer ein Spiralkabel aufweisenden Lade-Steckdose für Wand- oder Bodenbefestigung dargestellt. Bei dieser Lade-Steckdose 3 wird die automatische Kabelaufwicklung 31 durch ein Spiralkabel 36 ersetzt, welches sich im "Ruhezustand", bei welchem kein Fahrzeug geladen wird, innerhalb des Gehäuses 29 befindet und welches über die Kabel-Durchführung 33 aus dem Gehäuse 29 gezogen werden kann, um derart den Anschluss des zweiten Fahrzeug-Steckverbinders 21 (elektrischer Ausgangs-Anschluss) an der korrespondierenden Kupplung 23 des Fahrzeuges 22 zu ermöglichen. Das weitere Ende des als Lade-Kabel dienenden Spiralkabels 36 ist mit der Elektronik 35 verbunden, welche die Verbindung mit den Eingangs-Anschlussklemmen 10 und damit mit dem Anschlusskabel 11 herstellt.

Mit den vorstehend erläuterten Lade-Steckdosen 1, 2, 3 sind beispielsweise folgende Anwendungen realisierbar:
- Eine Lade-Steckdose 1, 2, 3 respektive die Kommunikations-/Auswerte-Nerarbeitungseinheit 13 bzw. die Funk-/Auswerte-Nerarbeitungseinheit 16 bekommen eine Ziel-Nummer bzw. Ziel-Mobilfunknummer zugewiesen, bei deren Anruf eine lokale Aktivierung der Lade-Steckdose erfolgt, indem die Kommunikations-/Auswerte-Nerarbeitungseinheit 13 bzw. die Funk-/Auswerte-Nerarbeitungseinheit 16 das Schaltglied 12 über dessen Steuereingang in den EIN-Zustand versetzen. Nachfolgend kann die Aufladung der Akkumulatoren des Fahrzeuges 22 erfolgen. Ohne eine derartige Aktivierung befindet sich das Schaltglied 12 im AUS-Zustand, d. h. eine Nutzung der Lade-Steckdose ist nicht möglich.
- Der aktuelle Ladestatus der Akkumulatoren des Fahrzeuges 22 wird über die Lade-Steuer-/Regelvorrichtung respektive den Fahrzeug-Rechner abgegriffen, über das Lade-Kabel übertragen und über die Kommunikations-/Auswerte-Nerarbeitungseinheit 13 bzw. die Funk-/Auswerte-Nerarbeitungseinheit 16 z. B. per SMS (Short Message System) an das Festnetz-Telefon 39 oder das Mobiltelefon 44 übertragen.
- Die erfasste, zur Aufladung der Akkumulatoren des Fahrzeuges 22 übertragene Leistung wird berechnet, über das Lade-Kabel übertragen und über die Kommunikations-/Auswerte-/Verarbeitungseinheit 13 bzw. die Funk-/Auswerte-/Verarbeitungseinheit 16 zu Verrechnungszwecken genutzt, d. h. in Rechnung gestellt. In diesem Zusammenhang können auch die bei der vorstehend erwähnten Identifizierung des Fahrzeuges festgestellten Daten verwendet werden. Alternativ kann auch unmittelbar in der Lade-Steckdose ein Rechner zur Erfassung und Weitermeldung der übertragenen Leistung vorgesehen sein.

Bei allen in den vorstehenden Figuren erläuterten Lade-Steckdosen 1, 2, 3 ist auch eine vereinfachte Ausführungsform realisierbar, welche kein Schaltglied 12 aufweist. Bei einer derart vereinfachten Ausführungsform ist ein Abschalten der Lade-Steckdose über das Telefonnetz nicht möglich.

### Bezugszeichenliste

- 1: Lade-Steckdose in Unterputz-Ausführung
- 2: Lade-Steckdose für Wand- oder Bodenbefestigung
- 3: Lade-Steckdose für Wand- oder Bodenbefestigung (mit Spiralkabel)
- 4: -
- 5: Steckdosen-Gerätesockel für den Anschluss des ersten Fahrzeug- Steckverbinders (elektrischer Ausgangs-Anschluss)
- 6: Zentralscheibe
- 7: Abdeckrahmen
- 8: Unterputzdose
- 9: -
- 10: Eingangs-Anschlussklemmen
- 11: Anschlusskabel
- 12: Schaltglied mit Steuereingang
- 13: Kommunikations-/Auswerte-/Verarbeitungseinheit inklusive Speicherele- ment
- 14: Telefonanschluss für Festnetz
- 15: -
- 16: Funk-/Auswerte-/Verarbeitungseinheit inklusive Speicherelement
- 17: Antenne
- 18: -
- 19: erster Fahrzeug-Steckverbinder
- 20: Lade-Kabel
- 21: zweiter Fahrzeug-Steckverbinder (elektrischer Ausgangs-Anschluss)
- 22: Fahrzeug
- 23: elektrische Kupplung zur Aufnahme des Fahrzeug-Steckverbinders
- 24: Fahrzeug-Rechner
- 25: Kabel
- 26: -
- 27: Wand
- 28: -
- 29: Gehäuse
- 30: Kabel
- 31: automatische Kabelaufwicklung
- 32: Lade-Kabel
- 33: Kabel-Durchführung
- 34: -
- 35: Elektronik
- 36: Spiralkabel
- 37: -
- 38: Festnetz
- 39: Festnetz-Telefon
- 40: Kabel
- 41: Kabel
- 42: -
- 43: Mobilfunknetz
- 44: Mobiltelefon
- 45: Funkstrecke
- 46: Funkstrecke

## Patentansprüche

1. Lade-Steckdose (1, 2, 3) zur Aufladung eines Elektroautos über ein zwischen Eingangs-Anschlussklemmen (10) der Lade-Steckdose und einer elektrischen Kupplung (23) des aufzuladenden Fahrzeuges (22) verlaufendes Lade-Kabel (20, 32, 36), mit Mitteln zur Einbindung der Lade-Steckdose in ein Telefonnetz, wobei diese Mittel eine Kommunikations-/Auswerte-Nerarbeitungseinheit (13,16) für das Telefonnetz (38, 43) umfassen.

2. Lade-Steckdose (1, 2, 3) nach Anspruch 1, **dadurch gekennzeichnet, dass** sie einen Telefonanschluss (14) für ein Festnetz aufweist und die Kommunikations-/Auswerte-/Verarbeitungseinheit (13) für die Kommunikation mit Festnetz-Telefonen (39) eines Festnetzes (38) ausgebildet ist.

3. Lade-Steckdose (1, 2, 3) nach Anspruch 1, **dadurch gekennzeichnet, dass** die Kommunikations-/Auswerte-Nerarbeitungseinheit als Funk-/Auswerte-Nerarbeitungseinheit (16) mit einer zugeordneten Antenne (17) für die Kommunikation mit Mobiltelefonen (44) eines Mobilfunknetzes (43) ausgebildet ist.

4. Lade-Steckdose (1, 2, 3) nach einem der vorstehenden Ansprüche, **dadurch gekennzeichnet, dass** die Kommunikations-/Auswerte-Nerarbeitungseinheit (13,16) mit dem Steuereingang eines zwischen Eingangs-Anschlussklemmen (10) und einen elektrischen Ausgangs-Anschluss (5, 21) der Lade-Steckdose eingebundenen Schaltgliedes (12) verbunden ist.

5. Lade-Steckdose (1, 2, 3) nach einem der vorstehenden Ansprüche, **gekennzeichnet durch** eine Daten-Kommunikation zwischen der Kommunikations-/Auswerte-Nerarbeitungseinheit (13,16) und einem Fahrzeug-Rechner (24) mit Auswerte-/Verarbeitungseinheit, wobei die Signalwandlung der kommunizierten Daten jeweils in den Auswerte-Nerarbeitungseinheiten erfolgt.

6. Lade-Steckdose (1) nach einem der vorstehenden Ansprüche, **gekennzeichnet durch** einen Steckdosen-Gerätesockel (5) als elektrischer Ausgangs-Anschluss zum Einführen eines Steckverbinders (19) eines Ladekabels (20).

7. Lade-Steckdose (1) nach Anspruch 6, **gekennzeichnet durch** eine Unterputz-Ausführung der Lade-Steckdose (1).

8. Lade-Steckdose (2, 3) nach einem der Ansprüche 1-5, **gekennzeichnet durch** ein innerhalb des Gehäuses (29) der Lade-Steckdose (2, 3) befindliches und bedarfsweise aus dem Gehäuse herausziehbares Lade-Kabel (32, 36) inklusive endseitigem Steckverbinder (21) als elektrischer Ausgangs-Anschluss.

9. Lade-Steckdose (2) nach Anspruch 8, **gekennzeichnet durch** eine automatische Kabelaufwicklung (31) des Lade-Kabels (32).

10. Lade-Steckdose (3) nach Anspruch 8, **gekennzeichnet durch** ein Spiralkabel (36) als Lade-Kabel.
